# EUROPÄISCHE PATENTANMELDUNG

(11) **EP 1 669 726 A1**
(43) Veröffentlichungstag der Anmeldung: **14.06.2006**
(21) Anmeldenummer: 05022419.5
(22) Anmeldetag: 14.10.2005
(51) Int. Cl.: G01D 11/24

(54) **Messgerät**

(30) Priorität: 13.12.2004 DE 102004060140; 12.07.2005 DE 102005032808
(71) Anmelder: Krohne AG, 4019 Basel (CH)
(72) Erfinder: Visser, Cornelis Johannes, 3362 JL Sliedrecht (NL); Herremans, Pieter, 3381 LH Giessenburg (NL)
(74) Vertreter: Gesthuysen, von Rohr & Eggert

(57) **Zusammenfassung**

Die Erfindung betrifft ein Meßgerät, mit einem Gehäuse, das einen in der Zündschutzart "Vergußkapselung" ausgeführten explosionsgeschützten Bereich auf weist. Erfindungsgemäß ist vorgesehen, daß der explosionsgeschützte Bereich wenigstens teilweise mit einem Vergußmaterial mit einer hohen Kompressibilität vergossen ist. Damit wird erreicht, daß es bei von Temperaturänderungen herrührenden Volumenänderungen des Gehäuses des Meßgeräts zu keinem Ablösen des Vergußmaterials von den Gehäusewänden oder zu einem unzulässig hohen Druck in dem Gehäuse kommt.

## Beschreibung

Die Erfindung betrifft ein Meßgerät, mit einem Gehäuse, das einen in der Zündschutzart "Vergußkapselung" ausgeführten explosionsgeschützten Bereich aufweist.

Meßgeräte, die in gasexplosionsgefährdeten Bereichen betrieben werden sollen, müssen explosionsgeschützt sein. Für einen solchen Explosionsschutz unterscheidet man verschiedene Zündschutzarten, wozu verschiedene Standards und Normen existieren, wie "FM3600" in den USA, die internationale Norm "IEC 60079-18" oder die Normen "DIN EN 50014 ff." betreffend elektrische Betriebsmittel für explosionsgefährdete Bereiche.

Eine dieser letztgenannten Normen, nämlich die DIN EN 50028, betrifft die Zündschutzartvergußkapselung, auch als Zündschutzart "m" für "molded" bezeichnet. Dabei handelt es sich um eine Zündschutzart, bei der Teile, die eine explosionsfiähige Atmosphäre durch Funken oder durch Erwärmung zünden könnten, derart in eine Vergußmasse eingebettet sind, daß die explosionsfahige Atmosphäre nicht entzündet werden kann.

Bei der Verwendung der Zündschutzart "Vergußkapselung" für Meßgeräte werden die zu schützende Bereiche häufig mit einem Kunstharz vergossen. Nach Aushärten des Kunstharzes liegt dann ein fester dreidimensionaler Körper vor, der die zu kapselnden Einrichtungen umgibt. Problematisch ist jedoch, daß es bei Temperaturänderungen und damit bei Volumenänderungen des vergossenen Bereichs des Meßgeräts zu einem erhöhten Druck in dem Meßgerät durch Druck auf dessen Gehäusewände oder zu Ablösungen des Kunstharzes von den Gehäusewänden des Meßgeräts kommen kann.

Damit es ist die Aufgabe der Erfindung, eine Möglichkeit anzugeben, einen in der Zündschutzart "Vergußkapselung" ausgeführten explosionsgeschützten Bereich derart auszugestalten, daß die zuvor genannten Probleme vermieden werden.

Ausgehend von dem eingangs beschriebenen Meßgerät ist die zuvor hergeleitete und aufgezeigte Aufgabe dadurch gelöst, daß der explosionsgeschützte Bereich wenigstens teilweise mit einem Vergußmaterial mit einer hohen Kompressibilität vergossen ist.

Erfindungsgemäß ist also vorgesehen, daß das für den explosionsgeschützten Bereich verwendete Vergußmaterial eine derartige Kompressibilität aufweist, die es dem Vergußmaterial im ausgehärteten Zustand erlaubt, sein Volumen einem sich aufgrund einer Temperaturänderung ändernden Volumen des Gehäuses des Meßgeräts anzupassen, ohne daß es zu einer Ablösung des Vergußmaterials von den Wänden des Gehäuses kommt und ohne daß das Vergußmaterial aufgrund seiner Unnachgiebigkeit gegen die Gehäusewände des Meßgeräts drückt.

Es hat sich gezeigt, daß ein Vergußmaterial mit einer Kompressibilität von größer oder gleich 10⁻⁸ 1/Pa für die in Rede stehende Anwendung gut geeignet ist. Besonders bevorzugt ist dabei eine Kompressibilität des Vergußmaterials von größer oder gleich 10⁻⁷ 1/Pa.

Darüber hinaus ist es gemäß einer bevorzugten Weiterbildung der Erfindung vorgesehen, daß die Vergußmasse einen geringen Temperaturausdehnungskoeffizienten aufweist. Vorzugsweise gilt dabei, daß der Temperaturausdehnungskoeffizient maximal 10⁻³ 1/K, ganz besonders bevorzugt maximal 3· 10⁻⁴ 1/K beträgt.

Grundsätzlich ist eine Vielzahl von Vergußmaterialien mit einer, wie zuvor beschrieben, hinreichend hohen Kompressibilität für die Erfindung verwendbar. Gemäß einer bevorzugten Weiterbildung der Erfindung ist jedoch vorgesehen, daß das Vergußmaterial im ausgehärteten Zustand eine schwammartige Struktur, also eine Porenstruktur, aufweist. Besonders bevorzugt ist dabei, daß das Vergußmaterial eine geschlossene Porenstruktur aufweist.

Gemäß einer bevorzugten Weiterbildung der Erfindung ist ferner vorgesehen, daß das Vergußmaterial eingeschlossene Gasbläschen aufweist. Dabei kann deren Durchmesser grundsätzlich ganz unterschiedlich sein. Gemäß einer bevorzugten Weiterbildung der Erfindung ist jedoch vorgesehen, daß die Gasbläschen einen Durchmesser im Mikrometerbereich aufweisen_

Grundsätzlich kann der mit dem Vergußmaterial vergossene explosionsgeschützte Bereich in einem nicht abgedichteten Bereich des Gehäuses vorgesehen sein. Gemäß einer bevorzugten Weiterbildung der Erfindung ist jedoch vorgesehen, daß der mit dem Vergußmaterial vergossene explosionsgeschützte Bereich abgedichtet ist. In einem solchen Fall kommen die Vorteile des erfindungsgemäß vorgesehenen Vergußmaterials mit seiner hohen Kompressibilität besonders zur Geltung, da gerade hier effektiv vermieden werden kann, daß es im Inneren des Gehäuses des Meßgeräts zu einem unzulässig hohen Druck kommt. Gemäß einer bevorzugten Weiterbildung der Erfindung ist ferner vorgesehen, daß der abgedichtete Bereich vollständig mit dem Vergußmaterial gefüllt ist.

Als besonders geeignetes Material für den Verguß hat sich ein additionsvernetzender Silikonkautschuk herausgestellt, der zur Verarbeitung vorzugsweise gießbar ist und bei höheren Temperaturen vulkanisiert. Dabei sind grundsätzlich Zwei- und Mehrkomponenten-Kautschukvarianten möglich. Gemäß einer bevorzugten Weiterbildung der Erfindung ist jedoch ein Einkomponenten-Kautschuk vorgesehen.

Neben dem zuvor beschriebenen erfindungsgemäßen Meßgerät betrifft die Erfindung auch die Verwendung eines Vergußmaterials mit einer hohen Kompressibilität zur Herstellung eines in der Zündschutzart "Vergußkapselung" ausgeführten explosionsgeschützten Bereichs in einem Gehäuse eines Meßgeräts.

Bevorzugte Weiterbildungen dieser Verwendung ergeben sich entsprechend den zuvor beschriebenen bevorzugten Weiterbildungen des erfndungsgemä-βen Meßgeräts Darüber hinaus ergibt sich eine bevorzugte Weiterbildung der erfindungsgemäßen Verwendung des Vergußmaterials dadurch, daß das Vergußmaterial sowohl im verarbeitbaren sowie im ausgehärteten Zustand die zuvor schon angesprochenen eingeschlossenen Gasbläschen aufweist.

Ausgehend von dem eingangs beschriebenen Meßgerät ist die weiter oben hergeleitete und aufgezeigte Aufgabe ferner dadurch gelöst, daß der explosionsgeschützte Bereich mit einem Vergußmaterial vergossen ist, das feinkörnige Bestandteile aufweist.

Solche feinkörnigen Bestandteile können z. B. kleinste Glaskügelchen oder Quarzsand sein. Dabei ist gemäß einer bevorzugten Weiterbildung der Erfindung vorgesehen, daß die feinkörnigen Bestandteile jeweils einen Durchmesser im Mikrometerbereich aufweisen. Als Vergußmaterial kann dabei z. B. der oben angesprochene Silikonkautschuk verwendet werden.

Ferner ist es vorteilhaft, wenn die feinkörnigen Bestandteile einen geringen thermischen Ausdehnungskoeffizienten aufweisen.

Damit betrifft die Erfindung neben dem zuvor beschriebenen Meßgerät auch die Verwendung eines Vergußmaterials mit feinkörnigen Bestandteilen zur Herstellung eines in der Zündschutzart "Vergußkapselung" ausgeführten explosionsgeschützten Bereichs in einem Gehäuse eines Meßgeräts.

Bevorzugte Weiterbildungen dieser Erfindung ergeben sich in Analogie zu den zuvor beschriebenen bevorzugten Weiterbildungen des erfindungsgemäßen Meßgeräts, dessen explosionsgeschützter Bereich mit einem Vergußmaterial vergossen ist, das feinkörnige Bestandteile aufweist.

Schließlich sei darauf hingewiesen, daß es auch möglich ist, bei einem Meßgerät der eingangs genannten Art den explosionsgeschützten Bereich wenigstens teilweise mit einem derartigen Vergußmaterial auszugießen, das sowohl eine hohe Kompressibiltät als auch feinkörnige Bestandteile aufweist.

Im einzelnen gibt es nun eine Vielzahl von Möglichkeiten, die erfindungsgemäßen Meßgeräte sowie die erfindungsgemäßen Verwendungen auszugestalten und weiterzubilden. Dazu wird auf die den unabhängigen Patentansprüchen nachgeordneten Patentansprüche sowie auf die nachfolgende Beschreibung eines bevorzugten Ausfährungsbeispiels der Erfindung verwiesen.

Gemäß einem bevorzugten Ausführungsbeispiel der Erfindung wird als Vergußmaterial mit einer hohen Kompressibilität ein zur Verarbeitung gießbarer, bei erhöhten Temperaturen vulkanisierbarer, additionsvernetzender Silikonkautschuk verwendet, der im ausgehärteten Zustand eine Vielzahl von mikroskopisch kleinen, eingeschlossenen Gasbläschen aufweist. Derartige Silikonkautschuke sind anwendungsfertig als Einkomponenten-Kautschuk verfügbar und zeichnen sich durch ihre niedrige Viskosität, ihre niedrige Dichte, ihre niedrige Vulkanisathärte und schnelles Aushärten bei höheren Temperaturen aus. Insbesondere sind derartige Einkomponenten-Kautschuke verfügbar, die bei einer Schichtdicke von 1 cm bei 150 °C schon innerhalb von 10 Minuten vollständig aushärten.

Ganz wesentlich für den vorteilhaften Einsatz solcher Einkomponenten-Silikonkautschuke ist deren hohe Kompressibilität, die die zuvor genannten Vorteile bietet, nämlich einem sich bei Temperaturänderungen ändernden Volumen des Gehäuses des Meßgeräts volumenmäßig folgen kann, ohne daß es zu einer Ablösung des Vergußmaterials oder zu einem erhöhten Druck auf die Gehäusewand des Meßgeräts kommt.

Gemäß dem bevorzugten Ausführungsbeispiel der Erfindung wird nun das Meßgerät, dessen Gehäuse einen explosionsgeschützten Bereich in der Zündschutzart "Vergußkapselung" aufweisen soll, in diesem Bereich mit dem zuvor beschriebenen Einkomponenten-Kautschuk vergossen. Dies erfolgt bei Umgebungstemperatur von ca. 20° C, bei der der Kautschuk ohne weiteres gießbar ist. Der explosionsgeschützte Bereich wird vollständig mit dem Kautschuk vergossen, und danach erfolgt ein Vulkanisieren des Kautschuks für 40 Minuten bei 140° C. Bei diesen Bedingungen lassen sich im allgemeinen Schichten und Körper mit einigen Zentimetern Dicke vollständig aushärten. In Abhängigkeit von der Geometrie des explosionsgeschützten Bereichs, der mit dem Kautschuk vergossen ist, muß die Zeit für das Vulkanisieren gegebenenfalls verlängert werden.

Nachdem der Kautschuk vollständig vulkanisiert ist, die in dem explosionsgeschützten Bereich vorgesehene zu schützende Einrichtung also vollständig von dem ausgehärteten Kautschuk umschlossen ist, wird der explosionsgeschützte Bereich in abdichtender Weise verschlossen. Damit steht eine Vergußkapselung zur Verfügung, die den Einsatz des Meßgeräts in weiten Temperaturbereichen ermöglicht, da aufgrund der hohen Kompressibilität des als Vergußmaterial verwendeten Kautschuks weder ein Ablösen des Vergußmateri als von den Gehäusewänden des Meßgeräts noch ein unzulässig hoher Druck im Gehäuse des Meßgeräts zu befürchten ist, da das Vergußmaterial bei temperaturabhängigen Volumenänderungen des Meßgerätsgehäuses diesen ohne weiteres folgen kann.

## Patentansprüche

1. Meßgerät, mit einem Gehäuse, das einen in der Zündschutzart "Vergußkapselung" ausgeführten explosionsgeschützten Bereich aufweist, **dadurch gekennzeichnet, daß** der explosionsgeschützte Bereich wenigstens teilweise mit einem Vergußmaterial mit einer hohen Kompressibilität vergossen ist.

2. Meßgerät nach Anspruch 1, **dadurch gekennzeichnet, daß** das Vergußmaterial im ausgehärteten Zustand eine schwammartige Struktur, vorzugsweise eine geschlossene Porenstruktur, aufweist.

3. Meßgerät nach Anspruch 2, **dadurch gekennzeichnet, daß** das Vergußmaterial eingeschlossene Gasbläschen, vorzugsweise mit einem Durchmesser im Mikrometerbereich, aufweist.

4. Meßgerät nach einem der Ansprüche 1 bis 3, **dadurch gekennzeichnet, daß** als Vergußmaterial ein additionsvernetzender Silikonkautschuk vorgesehen ist.

5. Verwendung eines Vergußmaterials mit einer hohen Kompressibilität zur Herstellung eines in der Zündschutzart "Vergußkapselung" ausgeführten explosionsgeschützten Bereichs in einem Gehäuse eines Meßgeräts.

6. Verwendung nach Anspruch 5, **dadurch gekennzeichnet, daß** das Vergußmaterial im ausgehärteten Zustand eine schwammartige Struktur, vorzugsweise eine geschlossene Porenstruktur, aufweist.

7. Verwendung nach Anspruch 5 oder 6, **dadurch gekennzeichnet, daß** das Vergußmaterial sowohl in seinem verarbeitbaren sowie im ausgehärteten Zustand eingeschlossene Gasbläschen, vorzugsweise mit einem Durchmesser im Mikrometerbereich, aufweist.

8. Meßgerät, mit einem Gehäuse, daß einen in der Zündschutzart "Vergußkapselung" ausgeführten explosionsgeschützten Bereich aufweist, **dadurch gekennzeichnet, daß** der explosionsgeschützte Bereich mit einem Vergußmittel vergossen ist, das feinkörnige Bestandteile aufweist.

9. Meßgerät nach Anspruch 8, **dadurch gekennzeichnet, daß** die feinkörnigen Bestandteile jeweils einen Durchmesser im Mikrometerbereich aufweisen.

10. Meßgerät nach Anspruch 8 oder 9, **dadurch gekennzeichnet, daß** die feinkörnigen Bestandteile einen geringen thermischen Ausdehnungskoeffizienten aufweisen.

11. Verwendung eines Vergußmaterials mit feinkörnigen Bestandteilen zur Herstellung eines in der Zündschutzart "Vergußkapselung" ausgeführten explosionsgeschützten Bereichs in einem Gehäuse eines Meßgeräts.

12. Verwendung nach Anspruch 11, **dadurch gekennzeichnet, daß** die feinkörnigen Bestandteile jeweils einen Durchmesser im Mikrometerbereich auf weisen.

13. Verwendung nach Anspruch 11 oder 12, **dadurch gekennzeichnet, daß** die feinkörnigen Bestandteile einen geringen thennischen Ausdehnungskoeffizienten aufweisen.
